# FASCICULE DE BREVET EUROPEEN

(11) **EP 1 199 228 B1**
(45) Date de publication et mention de la délivrance du brevet: **25.02.2004**
(21) Numéro de dépôt: 01401886.5
(22) Date de dépôt: 13.07.2001
(51) Int. Cl.: B60R 21/20

(54) **Ensemble couvercle pour sac gonflable de véhicule automobile et son procédé de fabrication**
Kraftfahrzeugairbagabdeckung und das dazugehörige Herstellungsverfahren
Vehicle airbag cover assembly and manufacturing method thereof

(30) Priorité: 18.07.2000 FR 0009428
(43) Date de publication de la demande: 24.04.2002
(73) Titulaire: Faurecia Industries, 92100 Boulogne-Billancourt (FR)
(72) Inventeur: Desprez, Daniel, 62710 Courrieres (FR)
(74) Mandataire: Blot, Philippe Robert Emile

(56) Documents cités:
- EP-A- 0 715 992
- EP-A- 0 947 396
- EP-A- 0 970 856
- WO-A-96/30232
- US-A- 5 096 220
- US-A- 5 639 115
- PATENT ABSTRACTS OF JAPAN vol. 1995, no. 05, 30 juin 1995 (1995-06-30) & JP 07 047904 A (INOAC CORP), 21 février 1995 (1995-02-21)

## Description

L'invention concerne un équipement de véhicule automobile tel que défini dans le préambule de la revendication 1.

Un tel équipement est connu de EP-A-947 396.

L'invention s'applique notamment aux planches de bord des véhicules automobiles.

On connaît dans l'état de la technique des équipements pour véhicules automobiles du type précité notamment des planches de bord.

Ces planches de bord ont l'inconvénient que la matière du support du module de sac gonflable doit satisfaire plusieurs conditions contradictoires, à savoir :
- elle doit être souple dans la zone de la charnière ;
- elle doit être rigide dans la zone portant le module de sac gonflable ;
- elle doit être compatible du point de vue fixation (collage/soudage) avec la matière du bandeau de planche de bord.

Dans le cas de l'utilisation d'une seule matière plastique pour le support de sac gonflable, il n'est pas possible de garantir que la charnière ne se rompe pas lors du déclenchement du sac gonflable, notamment à basse température.

L'invention a pour but de proposer un équipement pour véhicule automobile et notamment une planche de bord, qui soit facile à fabriquer et qui comprenne une articulation fiable du couvercle lors du déclenchement du sac gonflable.

A cet effet, l'invention a pour objet un équipement du type précité, caractérisé par les caractéristiques de la partie caractérisante de la revendication 1.

Suivant des modes particuliers de réalisation, l'invention peut comporter une ou plusieurs des caractéristiques des revendications 2 à 12.

L'invention a en outre pour objet un ensemble tel que défini par la revendication 13.

L'invention a en outre pour objet un procédé de fabrication d'un équipement tel que défini par les revendications 14 et 15.

L'invention sera mieux comprise à la lecture de la description qui va suivre, donnée uniquement à titre d'exemple, et faite en se référant aux dessins annexés, sur lesquels :

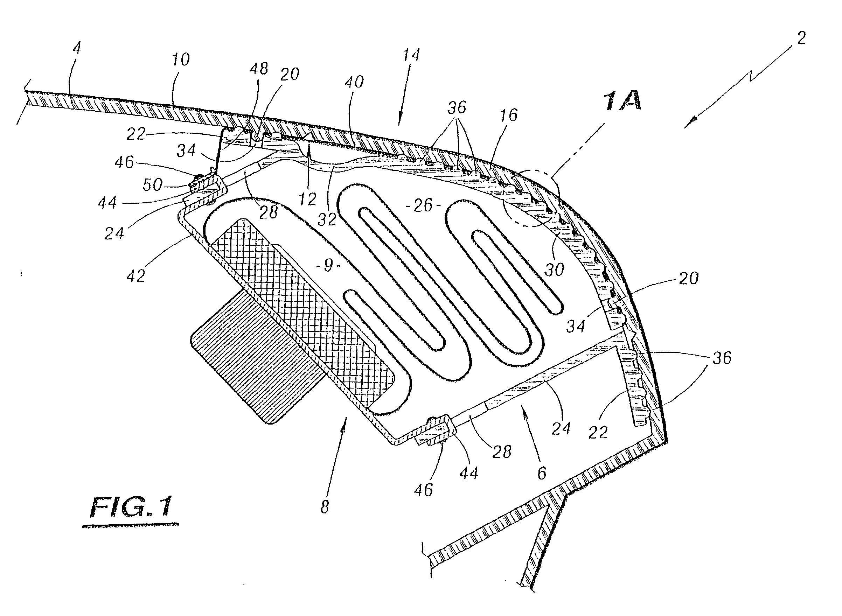

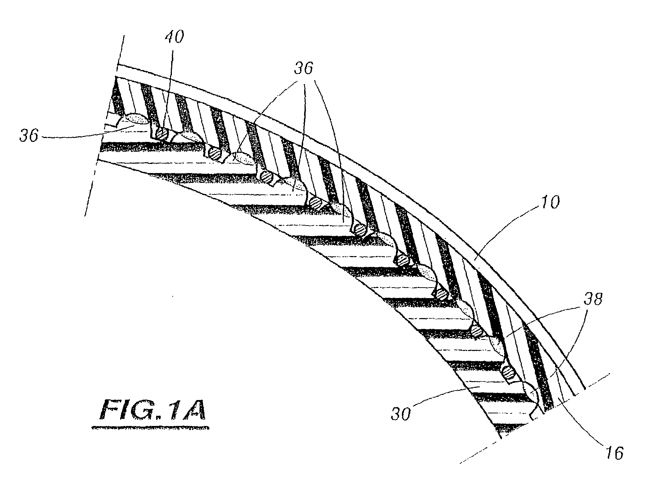

- la Figure 1 représente une coupe transversale d'une planche de bord selon l'invention ;
- la Figure 1A représente le détail 1A de la Figure 1 à plus grande échelle.

Sur la Figure 1, on a représenté un ensemble de planche de bord selon l'invention désigné par la référence générale 2.

Dans ce qui suit, l'expression « avant » se référera à la partie visible de la planche de bord à l'état monté, tandis que l'expression « arrière » désignera la partie non visible de celle-ci.

L'ensemble de planche de bord comprend essentiellement un bandeau de planche de bord 4, un support 6 de module à sac gonflable fixé sur la surface arrière de celui-ci, ainsi qu'un module de sac gonflable 8 muni d'un sac gonflable 9.

Le bandeau de planche de bord 4 est constitué de matière plastique thermoplastique rigidifiée, par exemple de polypropylène ou de polyéthylène ayant une teneur en talc comprise entre 10% et 20%. Le bandeau 4 est revêtu d'une peau de décor 10 sur sa surface visible.

Le bandeau de planche de bord 4 comporte une ligne de rupture préférentielle 12 ménagée sur la surface arrière du bandeau 4 et délimitant une ouverture 14 de déploiement du sac gonflable 9, recouverte par un couvercle 16 à l'état non gonflé du sac 9. Le couvercle 16 est fabriqué d'un seul tenant avec le bandeau 4. En variante, le couvercle peut être une pièce rapportée.

Des pions 20 de positionnement venus de moulage avec le bandeau 4 font saillie sur la surface arrière du bandeau.

Le support 6 est fabriqué d'un seul tenant, en matière thermoplastique à élasticité élevée par rapport au bandeau de planche de bord 4, par exemple en polypropylène comprenant un additif élastomère. De tels matériaux sont par exemple Vistaflex ® ou Téfabloc ®.

Le support 6 comporte une bride de fixation 22 du support au bandeau 4 s'appliquant contre la surface arrière du bandeau 4, et entourant la ligne de rupture préférentielle 12. Des parois 24 font saillie sur la bride 22 vers l'arrière et forment un boîtier 26 de réception du module à sac gonflable 8.

Des ouvertures de montage 28 sont ménagées dans la partie inférieure des parois 24. Le support 6 comporte en outre une plaque 30 qui est fixée sur la surface arrière du couvercle 16 et qui s'étend sensiblement sur toute la surface de ce dernier. La plaque 30 est reliée par une charnière à ruban 32 au bord supérieur de la bride 22. La charnière 32 chevauche la partie supérieure de la ligne de rupture préférentielle 12. A l'état non fixé, le support 6 est positionné par des trous 34 de positionnement ménagés dans la bride 22 et dans la plaque 30. Les pions 20 s'enfichent dans ces trous.

La bride 22 et la plaque 30 comportent en outre des nervures de soudage 36 sur leur côté dirigé vers le bandeau 4, les nervures 36 de la plaque 30 étant représentées plus en détail sur la Figure 1A. Les nervures 36 s'étendent sensiblement parallèlement l'une à l'autre et perpendiculairement au plan de la Figure 1A.

Le sommet 38 de chaque nervure est soudé à la surface intérieure du bandeau 4 ou du couvercle 16.

Un filet de renfort 40 est disposé entre le support 6 et le bandeau 4, et s'étend de la partie supérieure de la bride 22 sur toute la surface arrière du couvercle 16 en traversant la zone de la charnière à ruban 32.

Le filet 40 est fabriqué en matière plastique ayant un point de fusion supérieur à la température de soudage du support 6, du bandeau 4 et du couvercle 16. Le filet 40 peut être par exemple en polypropylène, polyéthylène ou en polyamide. En variante, le filet 40 peut être en métal. Il est à noter que le filet 40 présente une plus grande flexibilité à basse température que la charnière à ruban 32.

La hauteur du filet 40 est nettement inférieure à la hauteur des nervures de soudage 36 afin de ne pas empêcher une bonne solidarisation lors du soudage.

Il est à noter que, de préférence, la distance des nervures 36 entre elles est sensiblement égale au pas de maille du filet 40. Ainsi, on obtient une surface de soudage importante entre les deux composants.

Le module à sac gonflable 8 comporte une plaque de support 42 munie de parties formant crochet 44. Ces crochets 44 s'accrochent dans les ouvertures de montage 28 et sont fixés sur les parois 24 du support 6 par des rivets 46. Par ailleurs, le module à sac gonflable 8 est d'un type connu et n'est pas décrit plus en détail.

Une partie libre 48 du filet 40 fait saillie au-delà de la partie supérieure de la bride 22 et est fixée sur la partie supérieure de la paroi 24 du boîtier 26. Cette partie 48 du filet 40 est serrée entre une barrette de fixation 50 et le crochet 44 supérieur par le rivet de fixation 46 du module à sac gonflable sur le boîtier 26.

Le montage de l'ensemble de planche de bord selon l'invention s'effectue de la façon suivante.

Le bandeau 4 de planche de bord, le filet 40, le support 6 de module à sac gonflable ainsi que le module à sac gonflable 8 sont préfabriqués.

Tout d'abord, on place le bandeau 4 de planche de bord dans un dispositif de maintien d'une machine à souder par vibration.

Puis on applique le filet 40 sur le côté arrière du bandeau 4 de planche de bord, le filet 40 étant maintenu en position par les pions de positionnement 20.

Ensuite, on applique le support 6 du module à sac gonflable contre la surface arrière du bandeau 4 recouverte du filet 40. Le support 6 est également positionné par les pions 20.

La partie libre 48 du filet fait saillie par rapport au support. Ensuite, on soude le support 6, à travers les mailles du filet 40, contre le bandeau 4 et le couvercle 16.

Puis on retire l'ensemble de la machine à souder, et on met le module 8 à sac gonflable en place, on applique l'extrémité de la partie libre 48 du filet 40 contre la surface extérieure du crochet 44, et on pose la barrette de serrage 50 sur cette extrémité du filet.

Enfin, on rive le module 8, la barrette 50 et l'extrémité de la partie libre 48 du filet en une seule opération.

La planche de bord fonctionne de la façon suivante :

Lors d'un déclenchement du sac gonflable 9, celui-ci se gonfle et pousse contre la surface intérieure de la plaque 30 jusqu'à la rupture de la ligne de rupture préférentielle 12. A partir de ce moment-là, le couvercle 16 et la plaque 30 basculent vers le haut d'un seul bloc.

Dans le cas où la charnière à ruban 32 se rompt, par exemple à basse température, le couvercle 16 et la plaque 30 sont retenus par le filet 40.

Les forces de traction exercées par le couvercle 16 et/ou la plaque 30 sont absorbées en partie par l'extrémité serrée de la partie libre du filet 40.

Il est à noter que, même lors de l'apparition de fissures dans le couvercle 16 ou dans la plaque 30, la Probabilité d'une libération de petits morceaux de ces deux pièces est fortement diminuée grâce à la liaison du couvercle 16 et de la plaque 30 à travers le filet 40.

On constate que la disposition d'un filet 40 en sandwich entre le support 6, le bandeau 4 et le couvercle 16 permet, de façon simple et économique, d'augmenter la fiabilité de l'articulation du couvercle 16 sur le bandeau 4.

De plus, on obtient une plus grande liberté de choix de matériau pour le support 6, le bandeau 4 et le couvercle 16.

Il est à noter que d'autres techniques de fixation du support au bandeau et au couvercle peuvent être utilisées, par exemple le collage ou d'autres procédés de soudage.

## Revendications

1. Equipement de véhicule automobile du type comprenant :
- un bandeau (4) en matière plastique qui délimite une ouverture de déploiement (14) d'un sac gonflable (9) recouverte par un couvercle (16) à l'état non gonflé du sac gonflable (9);
- un support (6) de sac gonflable en matière plastique disposé contre la surface arrière du bandeau (4), ce support (6) comprenant une bride de fixation (22) qui s'étend sur au moins une partie du pourtour de l'ouverture de déploiement (14),
le support (6) comprenant en outre une plaque de fixation (30) du couvercle au support, reliée à la bride (22) par une charnière principale (32), la bride étant fixée au bandeau (4) et la plaque de fixation (30) étant fixée au couvercle (16) au moins dans la zone adjacente à la charnière principale (32),
**caractérisé en ce qu'**un filet de renfort (40) est disposé entre la bride (22) et le bandeau (4), ainsi qu'entre la plaque (30) et le couvercle (16), ce filet (40) s'étendant à travers la zone de charnière (32), et **en ce que**, d'une part, la bride (22) et le bandeau (4), et d'autre part, la plaque de fixation (30) et le couvercle (16), sont fixés l'un à l'autre à travers les mailles du filet (40).

2. Equipement selon la revendication 1, **caractérisé en ce que** le bandeau (4) et le couvercle (16) sont fabriqués d' un seul tenant, et **en ce que** le couvercle (16) est délimité par une ligne de rupture préférentielle (12), notamment ménagée dans la surface arrière du bandeau (4).

3. Equipement selon l'une quelconque des revendications précédentes, **caractérisé en ce que** le filet (40) présente une plus grande flexibilité à basse température que la charnière (32).

4. Equipement selon l'une quelconque des revendications 1 à 3, **caractérisé en ce que** le filet (40) a un point de fusion supérieur aux points de fusion du bandeau (4) et du couvercle (16).

5. Equipement selon la revendication 4, **caractérisé en ce que** le filet (40) est en métal.

6. Equipement selon la revendication 4, **caractérisé en ce que** le filet (40) est en matière plastique, notamment en polypropylène, en polyéthylène ou en polyamide.

7. Equipement selon l'une des revendications 4 à 6, **caractérisé en ce que** le support (6) est fixé au bandeau (4) et au couvercle (16) par soudage.

8. Equipement selon l'une quelconque des revendications 1 à 7, **caractérisé en ce que** le filet (40) et la plaque de fixation (30) s'étendent sensiblement sur toute la surface du couvercle (16), et **en ce que** la plaque de fixation (30) est fixée au couvercle (16) sensiblement sur toute cette surface.

9. Equipement selon la revendication 4 ou l'une des revendications dépendantes de la revendication 4, **caractérisé en ce que la distance entre les emplacements de** soudure (38) est sensiblement égale au pas. de maille du filet (40).

10. Equipement selon l'une quelconque des revendications précédentes, **caractérisé en ce que** le bandeau (4) Comporte des pions de positionnement (20), notamment venus de matière avec celui-ci, qui coopèrent avec les mailles du filet (40) et avec des évidements de positionnement (34) ménagés dans la bride (32) et dans la plaque de fixation (30).

11. Equipement selon l'une quelconque des revendications 1 à 10, **caractérisé en ce que** le support (6) est fabriqué d'une seule pièce.

12. Equipement selon l'une quelconque des revendications 1 à 11, **caractérisé en ce que** le support (6) constitue au moins une partie d'une planche de bord.

13. Ensemble comprenant un équipement selon l'une quelconque des revendications 1 à 12 et un module à sac gonflable (8), **caractérisé en ce que** le filet (40) comporte une partie libre (48), fixée sur le support (6) de sac gonflable par un moyen de fixation du module à sac gonflable (8) sur ce support (6).

14. Procédé de fabrication d'un équipement selon l'une quelconque des revendications 1 à 12, **caractérisé en ce qu'**il comprend les étapes suivantes :
- on fabrique le bandeau (4), le couvercle (16) et le support (6) notamment par injection en matière plastique ;
- on pose le filet de renfort (40) sur le couvercle (16) et la zone du bandeau (4) correspondant à la bride (22); et
- on fixe la bride (22) sur le bandeau (4) et la plaque (30) sur le couvercle (16), à travers les mailles du filet (40).

15. Procédé de fabrication selon la revendication 14 d'un équipement selon la revendication 4 ou l'une des revendications dépendantes de la revendication 4, **caractérisé en ce qu'**il comprend en outre les étapes suivantes :
- on pose le bandeau (4) et le couvercle (16) dans un dispositif de soudage ;
- on soude la bride (22) contre le bandeau (4), et la plaque (30) contre le couvercle (16), à travers les mailles du filet (40); et
- on retire l'équipement du dispositif de soudage.

16. Procédé de fabrication selon la revendication 15, **caractérisé en ce qu'**on réalise ledit soudage par soudage par vibrations.

## Patentansprüche

1. Kraftfahrzeugausrüstung eines Typs, der:
- ein Band (4) aus einem Kunststoffmaterial, das eine Öffnung (14) zum Entfalten eines aufblasbaren Sacks (9) begrenzt, die durch eine Abdeckung (16) im nicht aufgeblasenen Zustand des aufblasbaren Sacks (9) überdeckt ist, und
- einen Halter (6) für den aufblasbaren Sack aus einem Kunststoffmaterial umfasst, der an der Rückfläche des Bandes (4) angeordnet ist, wobei der Halter (6) einen Befestigungsflansch (22) umfasst, der sich über wenigstens einen Teil der Umrandung der Öffnung (14) zum Entfalten erstreckt, wobei
- der Hälter (6) weiterhin eine Befestigungsplatte (30) zum Abdecken des Halters umfasst, die mit dem Flansch (22) über ein Hauptscharnier (32), verbunden ist, und der Flansch am Band (4) und die Befestigungsplatte (30) an der Abdeckung (16) wenigstens in dem Bereich neben dem Hauptscharnier (32) befestigt sind,
**dadurch gekennzeichnet, dass** ein Verstärkungsnetz (40) zwischen dem Flansch (22) und dem Band (4) sowie zwischen der Platte (30) und der Abdeckung (16) angeordnet ist, welches Netz (40) quer zum Bereich des Scharniers (32) verläuft, und dass einerseits der Flansch (22) und das Band (4) und andererseits die Befestigungsplatte (30) und die Abdeckung (16) quer zu den Maschen des Netzes (40) aneinander befestigt sind.

2. Ausrüstung nach Anspruch 1, **dadurch gekennzeichnet, dass** das Band (4) und die Abdeckung (16) in einem Stück ausgebildet sind und dass die Abdeckung (16) von einer Sollbruchlinie (12) begrenzt ist, die insbesondere in der Rückfläche des Bandes (4) ausgespart ist.

3. Ausrüstung nach einem der vorhergehenden Ansprüche, **dadurch gekennzeichnet, dass** das Netz (40) bei niedriger Temperatur eine wesentlich größere Biegsamkeit als das Scharnier (32) hat.

4. Ausrüstung nach einem der Ansprüche 1 bis 3, **dadurch gekennzeichnet, dass** das Netz (40) einen Schmelzpunkt hat, der über den Schmelzpunkten des Bandes (4) und der Abdeckung (16) liegt.

5. Ausrüstung nach Anspruch 4, **dadurch gekennzeichnet, dass** das Netz (40) aus einem Metall besteht.

6. Ausrüstung nach Anspruch 4, **dadurch gekennzeichnet, dass** das Netz (40) aus einem Kunststoffmaterial, insbesondere aus Polypropylen, Polyethylen oder Polyamid besteht.

7. Ausrüstung nach einem der Ansprüche 4 bis 6, **dadurch gekennzeichnet, dass** der Halter (6) durch Schweißen am Band (4) und an der Abdeckung (16) befestigt ist.

8. Ausrüstung nach einem der Ansprüche 1 bis 7, **dadurch gekennzeichnet, dass** das Netz (40) und die Befestigungsplatte (30) im Wesentlichen über die gesamte Oberfläche der Abdeckung (16) verlaufen und dass die Befestigungsplatte (30) im Wesentlichen an dieser gesamten Oberfläche an der Abdeckung (16) befestigt ist.

9. Ausrüstung nach Anspruch 4 oder einem der von Anspruch 4 abhängigen Ansprüche, **dadurch gekennzeichnet, dass** der Abstand zwischen den Schweißstellen (38) im Wesentlichen gleich der Maschenweite des Netzes (40) ist.

10. Ausrüstung nach einem der vorhergehenden Ansprüche, **dadurch gekennzeichnet, dass** das Band (4) Positionierungsstücke (20) umfasst, die insbesondere in einem Stück damit ausgebildet sind und mit den Maschen des Netzes (40) und mit Positionierungsaussparungen (34) zusammenarbeiten, die in dem Flansch (32) und in der Befestigungsplatte' (30) ausgespart sind.

11. Ausrüstung nach einem der Ansprüche 1 bis 10, **dadurch gekennzeichnet, dass** der Halter (6) in einem Stück ausgebildet ist.

12. Ausrüstung nach einem der Ansprüche 1 bis 11, **dadurch gekennzeichnet, dass** der Halter (6) wenigstens einen Teil des Armaturenbrettes bildet.

13. Anordnung, die eine Ausrüstung nach einem der Ansprüche 1 bis 12 und einen Aufblassackmodul (8) umfasst, **dadurch gekennzeichnet, dass** das Netz (40) einen freien Teil (48) umfasst, der am Halter (6) des aufblasbaren Sacks mittels einer Einrichtung zur Befestigung des Aufblassackmoduls (8) am Halter (6) befestigt ist.

14. Verfahren zum Herstellen einer Ausrüstung nach einem der Ansprüche 1 bis 12, **dadurch gekennzeichnet, dass** es die folgenden Schritte umfasst:
- Herstellen des Bandes (4) der Abdeckung (16) und des Haltes (6), insbesondere durch Spritzgießen eines Kunststoffmaterials;
- Anordnen des Verstärkungsnetzes (40) an der Abdeckung (16) und im Bereich des Bandes (4), der dem Flansch (22) entspricht; und
- Befestigen des Flansches (22) am Band (4) und der Platte (30) an der Abdeckung (16) quer zu den Maschen des Netzes (40).

15. Verfahren zum Herstellen nach Anspruch 14 einer Ausrüstung nach Anspruch 4 oder eines von Anspruch 4 abhängigen Anspruchs, **dadurch gekennzeichnet, dass** es weiterhin die folgenden Schritte umfasst:
- Anordnen des Bandes (4) und der Abdeckung (16) in einer Schweißvorrichtung;
- Schweißen des Flansches (20) an das Band (4) und der Platte (30) an die Abdeckung (16) und zwar quer zu den Maschen des Netzes (40); und
- Herausnehmen der Anordnung aus der Schweißvorrichtung.

16. Verfahren zum Herstellen nach Anspruch 15, **dadurch gekennzeichnet, dass** der Schweißvorgang durch Vibrationsschweißen durchgeführt wird.

## Claims

1. Vehicle apparatus of the type comprising :
- a band (4) of plastics material which defines an opening (14) for the deployment of an airbag (9) concealed by a cover (16) when the airbag (9) is in its non-inflated state;
- a support (6) for the airbag made from a plastics material and arranged against the rear surface of the band (4), this support (6) comprising a securing flange (22) which extends over at least one part of the periphery of the opening (14) for deployment,
the support (6) further comprising a plate (30), for fitting the cover to the support, and which is connected to the flange (22) by a principal hinge (32), the flange being fixed to the band (4) and the mounting plate (30) being attached to the cover (16) at least in the area adjacent to the principal hinge (32),
**characterised in that** a reinforcing thread (40) is arranged between the flange (22) and the band (4), as well as between the plate (30) and the cover (16), this thread (40) extending across the area of the hinge (32), and **in that**, firstly, the flange (22) and the band (4), and, secondly, the mounting plate (30) and the cover (16), are attached to each other across the meshes of the thread (40).

2. Apparatus according to claim 1, **characterised in that** the band (4) and the cover (16) are made in one piece, and **in that** the cover (16) is defined by a preferential rupture line (12) notably arranged in the upper surface of the band (4).

3. Apparatus according to any of the preceding claims, **characterised in that** the thread (40) has a greater flexibility at low temperature than the hinge (32).

4. Apparatus according to any of claims 1 to 3, **characterised in that** the thread (40) has a higher fusing point than the fusing points of the band (4) and the cover (16).

5. Apparatus according to claim 4, **characterised in that** the thread (40) is made of metal.

6. Apparatus according to claim 4, **characterised in that** the thread (40) is made from a plastics material, notably polypropylene, polyethylene or polyamide.

7. Apparatus according to one of claims 4 to 6, **characterised in that** the support (6) is welded to the band (4) and to the cover (16).

8. Apparatus according to any of claims 1 to 7, **characterised in that** the thread (40) and the mounting plate (30) extend substantially over the whole surface of the cover (16), and **in that** the mounting plate (30) is attached to the cover (16) substantially over the whole of this surface.

9. Apparatus according to claim 4 or one of the dependent claims of claim 4, **characterised in that** the distance between the welding sites (38) is substantially equal to the gaps in the meshes of the thread (40).

10. Apparatus according to any of the preceding claims, **characterised in that** the band (4) comprises positioning pins (20), notably formed on the latter, which co-operate with the meshes of the thread (40) and with the positioning spaces (34) arranged in the flange (32) and in the mounting plate (30).

11. Apparatus according to any of claims 1 to 10, **characterised in that** the support (6) is made in one piece.

12. Apparatus according to any of claims 1 to 11, **characterised in that** the support (6) forms at least one part of a dashboard.

13. Assembly comprising an apparatus according to any of claims 1 to 12, and an airbag module (8), **characterised in that** the thread (40) includes a free part (48), attached to the support (6) of the airbag by a means for fixing the airbag module (8) to this support (6).

14. Method of manufacturing an apparatus according to any of claims 1 to 12, **characterised in that** it comprises the following steps :
- the band (4), the cover (16) and the support (6) are made notably by injection of a plastics material;
- the reinforcing thread (40) is positioned on the cover (16) and the area of the band (4) corresponding to the flange (22); and
- the flange (22) is secured to the band (4) and the plate (30) to the cover (16), across the meshes of the thread (40).

15. Method, according to claim 14, of manufacturing an apparatus according to claim 4 or one of the dependent claims of claim 4, **characterised in that** it further comprises the following steps:
- the band (4) and the cover (16) are put in a welding device;
- the flange (22) is welded to the band (4) and the plate (30) to the cover (16), across the meshes of the thread (40); and
- the apparatus is removed from the welding device.

16. Manufacturing method according to claim 15, **characterised in that** the said welding is vibration welding.
